# FASCICULE DE BREVET EUROPEEN

(11) **EP 1 098 162 B1**
(45) Date de publication et mention de la délivrance du brevet: **09.11.2005**
(21) Numéro de dépôt: 00402813.0
(22) Date de dépôt: 12.10.2000
(51) Int. Cl.: F42B 3/18, B60R 21/16, F42B 3/04, F42B 3/12

(54) **Initiateur pyrotechnique à filament photogravé protégé contre les décharges électrostatiques**
Gegen elektostatische Entladungen geschützter, pyrotechnischer Zünder mit durch Photoätzung hergestellter Zündbrücke
Pyrotechnic initiator with photo-etched ignition bridge and protection against electrostatic discharges

(30) Priorité: 05.11.1999 FR 9913849
(43) Date de publication de la demande: 09.05.2001
(73) Titulaire: LIVBAG, 75017 Paris (FR)
(72) Inventeur: Duguet, Jean-René, 95400 Survilliers (FR)
(74) Mandataire: Le Faou, Daniel

(56) Documents cités:
- EP-A- 0 802 092
- WO-A-98/25100
- US-A- 3 753 403
- US-A- 4 976 200

## Description

La présente invention se rapporte au domaine des initiateurs électro-pyrotechniques destinés à mettre à feu les chargements pyrotechniques des générateurs de gaz devant activer des dispositifs de protection pour les occupants des véhicules automobiles. Plus précisément l'invention concerne un initiateur dont la tête d'initiation comporte un circuit en feuilles métalliques à couches épaisses et qui est bien protégé contre les décharges électrostatiques.

Traditionnellement les initiateurs électro-pyrotechniques destinés à la sécurité automobile sont constitués par un corps isolant prolongé par un capuchon métallique fragmentable et traversé par deux électrodes. Les électrodes sont reliées entre elles par un filament résistif chauffant entouré par une composition explosive d'amorçage, par exemple une composition à base de trirésorcinate de plomb. De tels allumeurs qui sont par exemple décrits dans les brevets américains US 4,517,895 ou US 4,959,011 présentent cependant l'inconvénient d'être sensible aux vibrations du véhicule automobile au niveau des soudures du filament résistif sur les électrodes. Ces soudures lorsqu'elles sont sollicitées de manière répétitive par les vibrations du véhicule peuvent casser et rendre l'allumeur inopérant.

Pour remédier à cet inconvénient, on a alors développé des initiateurs dans lesquels les électrodes sont au contact de deux nappes métalliques conductrices distinctes étendues sur la surface du corps isolant qui est à l'intérieur du capuchon métallique. Ces deux nappes sont reliées entre elles par une bande plate résistive de faible largeur déposée sur la surface du corps isolant. Les nappes conductrices et la bande résistive sont recouvertes par une composition explosive d'amorçage.

Ces initiateurs se divisent en deux grandes familles. D'une part les initiateurs dont les nappes conductrices sont constituées par des circuits imprimés, comme ceux décrits, par exemple dans le brevet européen EP 0 802 092 ; et d'autre part les initiateurs dont les nappes conductrices et la bande résistive sont constituée par un empilement de feuilles métalliques photogravées comme ceux décrits, par exemple, dans le brevet US 5, 544, 585. Les initiateurs correspondant à cette dernière famille sont souvent appelés « initiateurs à feuilles en couches épaisses », l'épaisseur de chaque feuille métallique étant comprise généralement entre 2x10⁻⁶m et 7x10⁻⁶ m, ou encore entre 2 et 7 micromètres.

Les initiateurs dont les nappes conductrices sont constituées par des circuits imprimés permettent aisément la soudure en montage de surface de composants électronique tels que des varistances ou des condensateurs qui assurent à l'initiateur une très bonne protection électrostatique.

Par contre avec les initiateurs à feuilles en couches épaisses qui sont cependant simples et économiques, cette soudure est moins aisée et ces initiateurs étaient, jusqu'à présent, moins bien protégés contre les décharges électrostatiques.

L'objet de la présente invention est précisément de proposer des initiateurs à feuilles en couches épaisses qui sont bien protégés contre les décharges électrostatiques tout en ne nécessitant aucune soudure de composants électroniques en cours de montage.

L'invention concerne donc un initiateur électro-pyrotechnique comportant, à l'intérieur d'un conteneur fragmentable fermé et supporté par un surmoulage, une tête d'initiation constituée par une paroi étanche formée par un corps massif de hauteur h qui possède une face supérieure plane et qui enserre, sur toute sa hauteur h, une structure vitreuse traversée par deux électrodes en forme de broches, les dites électrodes ayant chacune une extrémité qui dépasse la dite face supérieure plane, ce dépassement permettant de les connecter électriquement à un circuit électrique à feuilles en couches épaisses qui est porté par un support isolant reposant sur la dite face supérieure plane et traversé lui-même par les dites électrodes, le dit circuit comportant un élément résistif plat chauffant relié aux dites électrodes par l'intermédiaire de deux nappes métalliques conductrices distinctes étendues sur le dit support, chaque nappes étant au contact de l'une des deux électrodes, le dit élément plat et les dites nappes métalliques étant recouverts par une composition pyrotechnique d'amorçage, le dit initiateur étant caractérisé en ce que :
- le circuit à feuilles en couches épaisses comprend une première couche constituée par une première feuille en alliage métallique résistif, d'épaisseur comprise entre 2x10⁻⁶m et 7x10⁻⁶m, collée sur le dit support et traversée par les dites électrodes, la dite première feuille ayant une forme qui présente, entre les électrodes, une partie médiane constituant l'élément résistif plat et dont le contour externe, à l'exception de la dite partie médiane, est constitué par des lignes courbes dont les rayons de courbure sont supérieurs à 7x10⁻⁴m, la dite première feuille étant recouverte, à l'exception de la dite partie médiane, par une seconde couche métallique conductrice servant à constituer les nappes métalliques qui sont traversées par les dites électrodes et qui sont de forme et d'épaisseur analogues à celles des parties de la première feuille qu'elles recouvrent.

Selon une première variante préférée de l'invention la plus petite distance entre le bord du support isolant et le contour externe du circuit à feuilles en couches épaisses est au moins égale à 35x10⁻⁵m.

Selon une seconde variante préférée de l'invention la dite partie médiane est de largeur constante.

Les initiateurs selon l'invention sont très simples et robustes, ils ne comportent aucun composant additionnel fixé par soudure et sont faciles à fabriquer lorsque le circuit à feuilles en couches épaisses est réalisé par photogravure comme décrit, par exemple, dans le brevet US 5, 544, 585. Il a été observé que ces initiateurs présentent une résistance remarquable aux décharges électrostatiques, particulièrement lorsque la forme du circuit à feuilles en couches épaisses est telles que le plan reliant les deux électrodes traverse, au niveau du support, une alternance de zones conductrices et de zones isolantes comme il sera décrit en détails plus loin dans la description.

La première feuille sera avantageusement constituée par un alliage résistif à base de nickel et de chrome tandis que la seconde couche sera avantageusement constituée par une feuille de cuivre.

La seconde feuille pourra avantageusement être recouverte par une troisième couche qui sera un dépôt d'étamage à base d'étain de forme et d'épaisseur analogues aux parties de la seconde couche qu'elle recouvrira.

Enfin la forme générale du circuit électrique à feuilles en couches épaisses sera avantageusement celle d'un « S ».

Les initiateurs selon l'invention peuvent ainsi être facilement fabriqués en série à des coûts modestes et trouvent leur application préférée dans les générateurs pyrotechniques de gaz destinés à activer des dispositifs de protection pour les occupants d'un véhicule automobile.

On donne maintenant une description détaillée d'une réalisation préférée de l'invention en se référant aux figures 1 à 5.
La figure **1** est une vue en coupe axiale d'un initiateur selon l'invention dont le circuit comporte deux couches.
La figure **2** est une vue de dessus du support et du circuit à feuilles en couches épaisses de l'initiateur représenté à la figure 1.
La figure **3** est une coupe selon A-A de la figure 2.
La figure **4** représente la même coupe dans le cas où le circuit comporte en plus une couche d'étamage.
La figure **5** représente le schéma électrique d'un dispositif permettant de tester la résistance aux décharges électrostatiques des initiateurs selon l'invention.

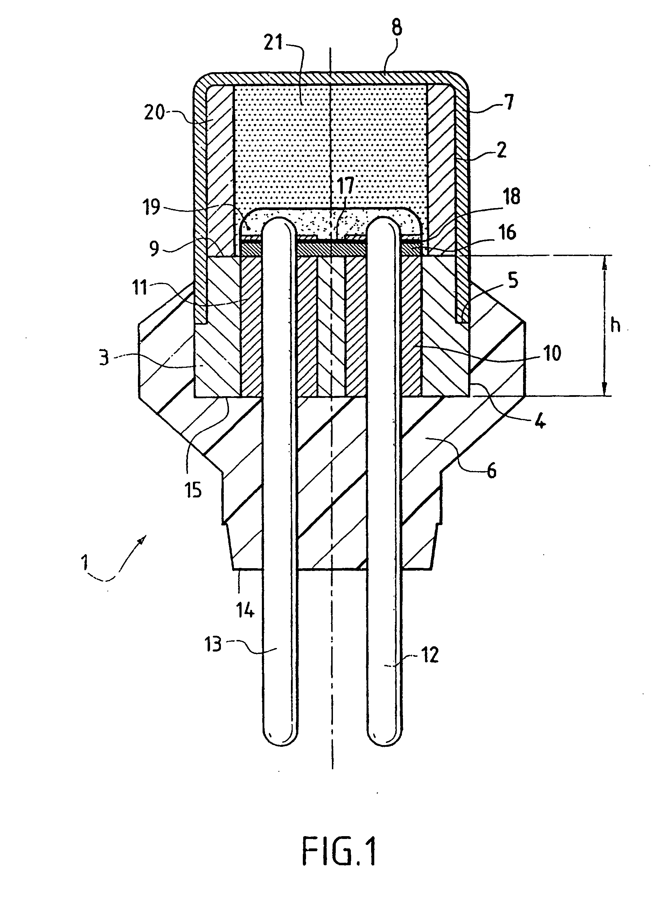

Un initiateur électro-pyrotechnique 1 selon l'invention est représenté à la figure 1. Cet initiateur 1 est constitué par un conteneur cylindrique 2 fragmentable ouvert à l'une de ses extrémités. Un corps cylindrique massif 3 ferme l'extrémité ouverte du conteneur 2. La paroi latérale 4 du corps 3 présente un épaulement externe 5 sur lequel prend appui l'extrémité ouverte du conteneur 2. Le conteneur 2 et le corps 3 sont enserrés dans un surmoulage 6 qui les maintient solidaires l'un de l'autre. Le conteneur 2 a ainsi la forme d'un capuchon cylindrique présentant une paroi latérale 7 et une extrémité fermée pleine 8. Le conteneur 2 est avantageusement constitué par un métal léger fin comme l'aluminium et sa face plane est avantageusement fragilisée pour pouvoir s'ouvrir aisément sous l'effet d'une augmentation de la pression régnant à l'intérieur du conteneur. Le surmoulage 6 est réalisé préférentiellement dans une résine thermoplastique comme, par exemple, le téréphtalate de polyéthylène.

Le corps 3 doit pouvoir faire fonction de paroi étanche à une détonation et aux gaz de combustion résultant de cette détonation. Ce corps 3 est préférentiellement réalisé dans un métal dense comme l'acier. Le corps 3 présente une face supérieure 9 plane et une face inférieure 15 également plane et il enserre, sur toute sa hauteur h, deux tubes creux en verre 10 et 11. Chacun de ces tubes contient une électrode 12, 13 en forme de broche.

Chaque électrode présente une extrémité qui dépasse la face supérieure plane 9 du corps 3 et une extrémité qui dépasse la face inférieure 14 du surmoulage 6. Sur la face supérieure plane 9 du corps 3 est fixé, par exemple par collage, un support isolant 16 constitué par une plaque réalisée à partir d'un mélange verre/résine, comme, par exemple, une résine polyépoxy. Les électrodes 12 et 13 traversent et dépassent le support isolant 16.

Le support isolant 16 porte un circuit électrique 18 à feuilles en couches épaisses comportant un élément résistif plat chauffant 17. Ce circuit qui va être décrit en détails un peu plus loin est traversé par les électrodes 12 et 13 et connecté électriquement à ces dernières. Le circuit 18 comportant l'élément résistif 17 est recouvert par une composition pyrotechnique d'amorçage 19 par exemple à base de trinitrorésorcinate de plomb. Le conteneur 2 contient également un tube métallique 20 renforçant la paroi latérale 7. A l'intérieur du tube 20 est placée une poudre d'allumage 21 constituée, par un exemple, par une poudre à base de nitrocellulose ou par un mélange de bore et de nitrate de potassium.

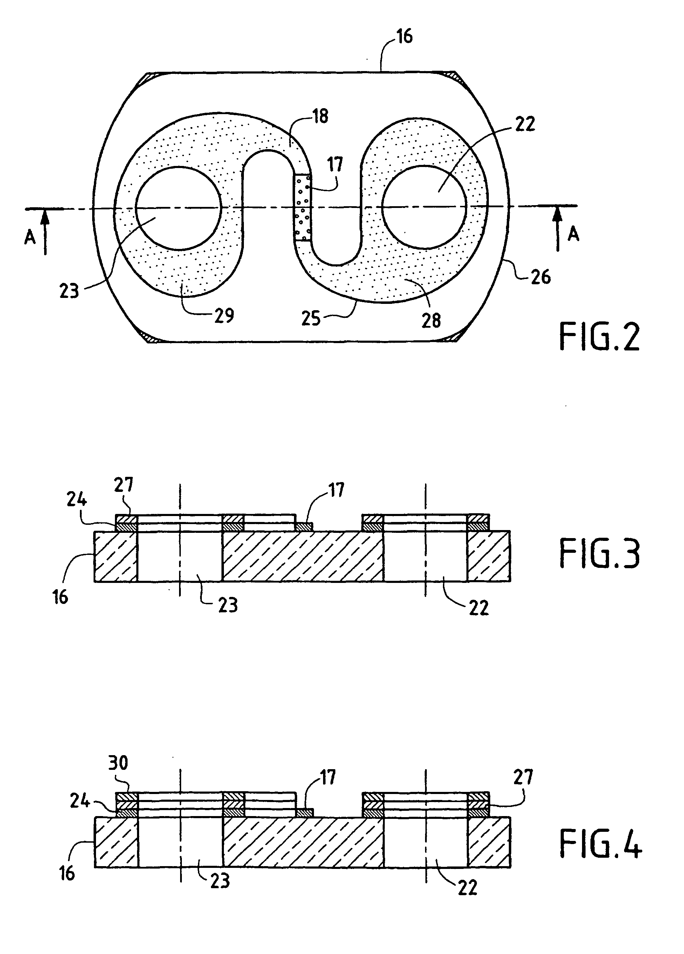

On décrit maintenant le circuit 18 en se référant plus particulièrement aux figures 2,3, et 4. Le circuit 18 est porté par le support isolant 16 qui a la forme d'une plaque comportant deux canaux cylindriques 22 et 23 destinés à laisser passer les électrodes 12 et 13.

Le circuit 18 est fondamentalement constitué par une première feuille 24 en alliage métallique résistif, par exemple un alliage à base de nickel et de chrome.

Cette feuille dont l'épaisseur est comprise entre 2 et 7 microns, c'est-à-dire entre 2x10⁻⁶m et 7x10⁻⁶m, ne recouvre pas les canaux 22 et 23 et possède une forme qui présente, entre les canaux 22 et 23 dans lesquels vont passer les électrodes 12 et 13, une partie médiane de largeur constante qui va constituer l'élément résistif plat 17. A l'exception de cette partie médiane, le contour externe 25 de cette feuille 24 est constitué par des lignes courbes dont les rayons de courbure sont supérieurs à 0,7mm, c'est-à-dire 7x10⁻⁴m. Par ailleurs la plus petite distance entre les bords 26 du support isolant 16 et le contour externe 25 de la feuille 24 doit être au moins égale à 0,35 mm, c'est-à-dire 35x10⁻⁵m. La première feuille 24 est recouverte, à l'exception de la partie médiane constituant l'élément résistif plat 17, par une seconde couche métallique 27 conductrice, par exemple en cuivre. Cette seconde couche 27 sert à constituer deux nappes métalliques conductrices 28 et 29 qui seront traversées par les électrodes 12 et 13 et qui seront connectées électriquement à ces dernières. Ces nappes ont une forme identique à la forme des parties de la feuille 24 qu'elles recouvrent. L'épaisseur de la seconde couche 27 est analogue à celle de la feuille 24.

Comme représenté à la figure 4, la seconde couche 27 peut avantageusement être recouverte par une troisième couche 30 qui sera constitué par un dépôt d'étamage de forme et d'épaisseur analogues à celles de la seconde couche 27 et qui laissera donc libre l'élément résistif plat 17 appartenant à la première feuille 24.

A ce stade de la description, il est indiqué que sur les figures 3 et 4 les épaisseurs des couches 24, 27 et 30 ne sont pas proportionnelles à l'épaisseur du support isolant 16.

Le dépôt sur le support 16 d'un circuit à feuilles en couches épaisses, tel qu'il vient d'être décrit, peut aisément être réalisé par les techniques de photogravure connues de l'homme de métier. Il a été observé que les initiateurs comportant un circuit 18 selon l'invention présentent une résistance aux décharges électrostatiques très supérieure à celle des initiateurs comportant un circuit à feuilles en couches épaisses traditionnel dans lequel les nappes conductrices présentent des angles vifs et/ou recouvrent le support isolant jusqu'à sa périphérie. Cela est particulièrement vrai lorsque la forme générale du circuit 18 est celle d'un « S », comme représenté aux figures 2, 3, et 4. Cette forme assure dans le plan reliant les deux électrodes, au niveau du support 16, une alternance de zones conductrices et de zones isolantes qui renforce particulièrement la résistance de l'initiateur aux décharges électrostatiques.

Un initiateur selon l'invention est par ailleurs particulièrement simple et économique à fabriquer en série. On commence par déposer, par photogravure, le circuit 18 sur le support isolant 16. On confectionne ensuite la tête d'initiation en déposant le support ainsi équipé sur le corps 3 par introduction et fixation des électrodes 12 et 13. On recouvre la tête d'initiation par la composition d'amorçage 19 et on introduit la tête ainsi recouverte dans le capuchon 2 contenant déjà le tube renforçateur 20 et la poudre d'allumage 21. Il suffit alors de fermer et solidariser l'ensemble par le surmoulage 6. Les initiateurs à feuilles en couches épaisses étant par ailleurs particulièrement résistant aux vibrations, ces initiateurs trouvent une application préférée dans le domaine de la protection, par dispositifs pyrotechniques, des occupants d'un véhicule automobile.

### Exemple

On a réalisé deux lots d'initiateurs comportant un circuit électrique à feuilles en couches épaisses.
Lot A : circuit traditionnel selon le brevet US 5, 544,585.
Lot B : circuit selon l'invention.

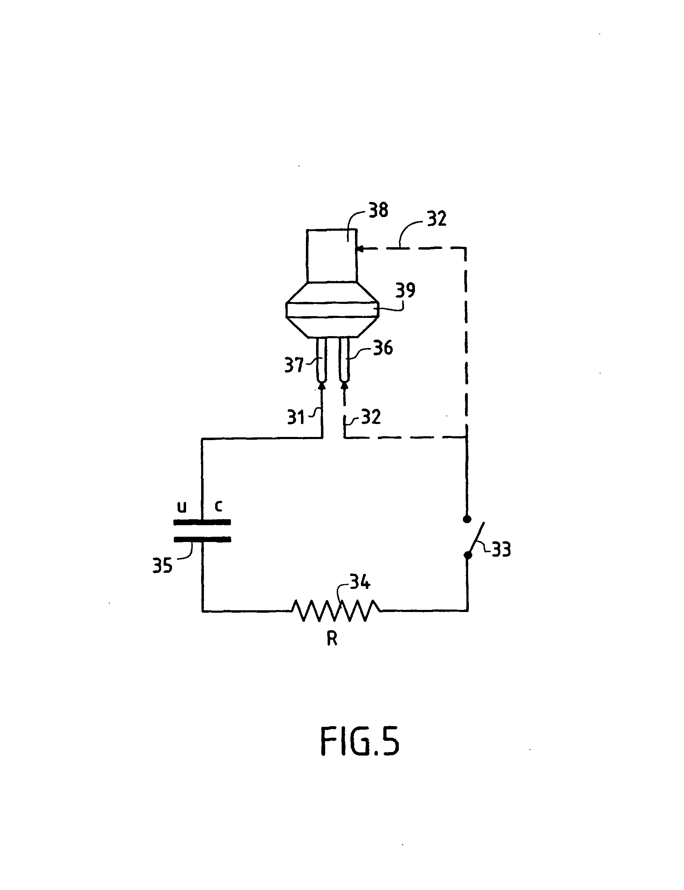

La résistance aux décharges électrostatiques de ces deux lots d'initiateurs a été testée dans le dispositif expérimental représenté à la figure 5.

Ce dispositif est constitué par deux pinces conductrices 31 et 32 reliées, par l'intermédiaire d'un interrupteur 33, à une résistance 34 et à un condensateur 35 montés en série. La résistance 34 a une valeur R et le condensateur 35 a une capacité C et est chargé sous une tension U. La pince 31 est fixée sur l'électrode 37 de l'initiateur 39 que l'on veut tester, tandis que la pince 32 est fixée, au choix, sur l'électrode 36 ou sur le capuchon 38 de l'initiateur 39. Il est ainsi possible de mesurer, par fermeture de l'interrupteur 33, la résistance de l'initiateur aux décharges électriques dans les configurations usuellement testées et connues par leurs appellations anglo-saxonnes « pin to pin » ou « pin to case ».

Le tableau ci-dessous donne, pour chaque lot d'initiateurs, la valeur minimale de la résistance R et de la capacité C, pour n'avoir aucun allumage d'initiateur lorsque le condensateur 35 est chargé sous une tension de 25 000 volts.

| LOT | R | C |
|---|---|---|
| A | 5 000 ohms | 500 picofarads |
| B | 330 ohms | 150 picofarads |

## Revendications

1. Initiateur électro-pyrotechnique (1) protégé contre les décharges électrostatiques comportant, à l'intérieur d'un conteneur fragmentable (2) fermé et supporté par un surmoulage (6), une tête d'initiation constituée par une paroi étanche formée par un corps massif (3) de hauteur h qui possède une face supérieure plane (9) et qui enserre, sur toute sa hauteur h, une structure vitreuse (10, 11) traversée par deux électrodes (12, 13) en forme de broches, les dites électrodes ayant chacune une extrémité qui dépasse la dite face supérieure plane, ce dépassement permettant de les connecter électriquement à un circuit électrique (18) à feuilles en couches épaisses qui est porté par un support isolant (16) reposant sur la dite face supérieure plane et traversé lui-même par les dites électrodes, le dit circuit comportant un élément résistif plat (17) chauffant relié aux dites électrodes par l'intermédiaire de deux nappes métalliques conductrices (28, 29) distinctes étendues sur le dit support, chaque nappe étant au contact de l'une des deux électrodes, le dit élément plat et les dites nappes métalliques étant recouverts par une composition pyrotechnique d'amorçage (19), **caractérisé en ce que** : le dit circuit à feuilles en couches épaisses comprend une première couche constituée par une première feuille (24) en alliage métallique résistif, d'épaisseur comprise entre 2x10⁻⁶m et 7x10⁻⁶m, collée sur le dit support, et traversée par les dites électrodes, la dite première feuille ayant une forme qui présente, entre les électrodes, une partie médiane constituant l'élément résistif plat (17) et dont le contour externe (25), à l'exception de la dite partie médiane, est constitué par des lignes courbes dont les rayons de courbure sont supérieurs à 7x10⁻⁴m, la dite première feuille étant recouverte, à l'exception de la dite partie médiane, par une seconde couche métallique (27) conductrice servant à constituer les nappes métalliques (28,29) qui sont traversées par les dites électrodes et qui sont de forme et d'épaisseur analogues à celles des parties de la première feuille qu'elles recouvrent.

2. Initiateur selon la revendication 1 **caractérisé en ce que** la plus petite distance entre le bord (26) du support isolant et le contour externe (25) du circuit à feuilles en couches épaisses est au moins égale à 35x10⁻⁵m.

3. Initiateur selon la revendication 2 **caractérisé en ce que** la dite partie médiane est de largeur constante.

4. Initiateur selon l'une quelconque des revendications 1 à 3 **caractérisé en ce que** le plan reliant les deux électrodes traverse, au niveau du support, une alternance de zones conductrices et de zones isolantes.

5. Initiateur selon la revendication 4 **caractérisé en ce que** la dite première feuille est constituée par un alliage de nickel et de chrome.

6. Initiateur selon la revendication 5 **caractérisé en ce que** la dite seconde feuille est une feuille de cuivre.

7. Initiateur selon l'une quelconque des revendications 1 à 3 **caractérisé en ce que** la seconde couche est recouverte par une troisième couche qui est un dépôt d'étamage de forme et d'épaisseur analogues à celles de la seconde couche.

8. Initiateur selon la revendication 3 **caractérisé en ce que** la forme générale du circuit électrique (18) à feuilles en couches épaisses est celle d'un « S ».

## Patentansprüche

1. Elektro-pyrotechnischer Zünder (1), der gegen elektrostatische Entladungen geschützt ist und der im Inneren eines von einem Formteil (6) verschlossenen und von diesem getragenen zerbrechlichen Behälters (2) einen Zündkopf umfaßt, der durch eine dichte Wand gebildet wird, die durch einen massiven Körper (3) der Höhe h gebildet wird, der eine ebene obere Fläche (9) hat und der über seine ganze Höhe h eine glasartige Struktur (10, 11) eng umschließt, die von zwei Elektroden (12, 13) in Stiftform durchzogen wird, wobei jede der Elektroden ein Ende hat, das über die ebene obere Fläche hinausragt, wobei dieser Überstand es gestattet, sie elektrisch mit einer elektrischen Schaltung (18) in Dickschichtlagen zu verbinden, die von einem isolierenden Träger (16) getragen wird, der auf der ebenen oberen Fläche sitzt und der selbst von den Elektroden durchzogen wird, wobei die Schaltung ein heizendes flaches Widerstandselement (17) umfaßt, das über zwei getrennte leitende metallische Auflagen (28, 29), die sich auf dem Träger erstrecken, mit den Elektroden verbunden ist, wobei jede Auflage mit einer der Elektroden in Kontakt ist und das flache Element und die metallischen Auflagen mit einer pyrotechnischen Zündmischung (19) bedeckt sind, **dadurch gekennzeichnet, daß** die Schaltung in Dickschichtlagen eine erste Schicht umfaßt, die aus einer ersten Lage (24) aus einer metallischen Widerstandslegierung gebildet ist, mit einer Dicke zwischen 2x10⁻⁶ m und 7x10⁻⁶ m, die auf den Träger geklebt und von den Elektroden durchzogen ist, wobei die erste Lage eine Form hat, die zwischen den Elektroden einen Mittelabschnitt hat, der das flache Widerstandselement (17) bildet, und ihre äußere Kontur (25), mit Ausnahme des Mittelabschnitts, durch gekrümmte Linien gebildet wird, deren Krümmungsradien größer als 7x10⁻⁴ m sind, wobei die erste Lage, mit Ausnahme des Mittelabschnitts, von einer zweiten leitenden metallischen Schicht (27) bedeckt ist, die dazu dient, die metallischen Auflagen (28, 29) zu bilden, die von den Elektroden durchzogen sind und deren Form und Dicke vergleichbar zu denen der Abschnitte der ersten Lage, die sie bedecken, sind.

2. Zünder nach Anspruch 1, **dadurch gekennzeichnet, daß** der kleinste Abstand zwischen dem Rand (26) des isolierenden Trägers und der äußeren Kontur (25) der Schaltung in Dickschichtlagen wenigstens 35x10⁻⁵ m beträgt.

3. Zünder nach Anspruch 2, **dadurch gekennzeichnet, daß** der Mittelabschnitt konstante Breite hat.

4. Zünder nach einem der Ansprüche 1 bis 3, **dadurch gekennzeichnet, daß** die Ebene, die die zwei Elektroden verbindet, im Bereich des Trägers eine Wechselfolge von leitenden Zonen und isolierenden Zonen durchläuft.

5. Zünder nach Anspruch 4, **dadurch gekennzeichnet, daß** die erste Lage aus einer Legierung von Nickel und Chrom gebildet ist.

6. Zünder nach Anspruch 5, **dadurch gekennzeichnet, daß** die zweite Lage eine Kupferlage ist.

7. Zünder nach einem der Ansprüche 1 bis 3, **dadurch gekennzeichnet, daß** die zweite Schicht mit einer dritten Schicht überdeckt ist, die eine Verzinnungsauftragung mit einer Form und Dicke vergleichbar mit denen der zweiten Lage ist.

8. Zünder nach Anspruch 3, **dadurch gekennzeichnet, daß** die allgemeine Form der elektrischen Schaltung (18) in Dickschichtlagen die eines "S" ist.

## Claims

1. An electro-pyrotechnic initiator (1) protected against electrostatic discharges, the initiator comprising: inside a fragmentable container (2) closed and supported by an overmolding (6), an initiation head constituted by an impermeable wall formed by a solid body (3) of height h possessing a plane top face (9) and gripping, over its entire height h, a vitreous structure (10, 11) having two pin-forming electrodes (12, 13) passing therethrough, each of said electrodes having an end that projects beyond said plane top face, said projections enabling them to be electrically connected to a thick-film multi-foil electrical circuit (18) carried by an insulating support (16) resting on said plane top face and itself having said electrodes passing therethrough; said circuit having a flat resistive heater element (17) connected to said electrodes via two distinct conductive metal areas (28, 29) extending on said support, each area being in contact with a respective one of the two electrodes, said flat element and the said metal areas being covered by a pyrotechnic initiator composition (19), the initiator being **characterized in that**: said thick-filmed multi-foil circuit comprises a first layer constituted by a first foil (24) of resistive metal alloy having thickness lying in the range 2×10⁻⁶ meters (m) to 7×10⁻⁶ m, bonded onto said support and having said electrodes passing therethrough, said first foil being of a shape that presents, between the electrodes, a middle portion constituting the flat resistive element (17), and that presents an outline (25), with the exception of said middle portion, that is constituted by curved lines with radii of curvature greater than 7×10⁻⁴m, said first foil being covered, with the exception of said middle portion, by a second conductive metal layer (27) serving to constitute the metal areas (28, 29) through which said electrodes pass and of shape and thickness analogous to the shape and thickness of the portions of the first foil that they cover.

2. An initiator according to claim 1, **characterized in that** the shortest distance between the edge (26) of the insulating support and the outline (25) of the thick-film multi-foil circuit is not less than 35×10⁻⁵ m.

3. An initiator according to claim 2, **characterized in that** said middle portion is of constant width.

4. An initiator according to any one of claims 1 to 3, **characterized in that** the plane joining the two electrodes passes, in the support, through alternating conductive zones and insulating zones.

5. An initiator according to claim 4, **characterized in that** said first foil is constituted by a nickel-chromium alloy.

6. An initiator according to claim 5, **characterized in that** said second foil is a copper foil.

7. An initiator according to any one of claims 1 to 3, **characterized in that** the second layer is covered by a third layer that is a tinning deposit of shape and thickness analogous to the shape and thickness of the second layer.

8. An initiator according to claim 3, **characterized in that** the general shape of the thick-film multi-foil electrical circuit (18) is an S-shape.
